# EUROPÄISCHE PATENTSCHRIFT

(11) **EP 0 958 964 B1**
(45) Veröffentlichungstag und Bekanntmachung des Hinweises auf die Patenterteilung: **14.08.2002**
(21) Anmeldenummer: 99108906.1
(22) Anmeldetag: 05.05.1999
(51) Int. Cl.: B60R 13/00, B28D 1/30

(54) **Verkleidungsteil für Dekorationszwecke und Verfahren zu dessen Herstellung**
Decorative trim element and method of manufacture thereof
Elément de revêtement décoratif et son procédé de fabrication

(30) Priorität: 19.05.1998 DE 19822425
(43) Veröffentlichungstag der Anmeldung: 24.11.1999
(73) Patentinhaber: DaimlerChrysler AG, 70567 Stuttgart (DE)
(72) Erfinder: Spoerle, Frank, 71229 Leonberg (DE)

(56) Entgegenhaltungen:
- EP-A- 0 122 357
- DE-A- 4 134 373
- FR-A- 2 643 023
- US-A- 5 078 815
- DATABASE WPI Section Ch, Week 9613 Derwent Publications Ltd., London, GB; Class A93, AN 96-126876 XP002114030 & JP 08 018393 B (ASAHI KASEI KOGYO KK), 28. Februar 1996 (1996-02-28)

## Beschreibung

Die Erfindung betrifft ein Verkleidungsteil für Dekorationszwecke, insbesondere im Innenbereich und hier bevorzugt für die Innenverkleidung von Fahrgasträumen von Fahrzeugen, nach der in Anspruch 1 näher definierten Art. Des weiteren betrifft die Erfindung ein Verfahren zur Herstellung eines Verkleidungsteiles.

Allgemein bekannt ist die Verwendung von Naturmaterialien wie Holz, Holzfurnier, Leder, Textilien und Ähnlichem, zur dekorativen Ausgestaltung von Innenbereichen, speziell auch von Innenverkleidungen von Fahrgasträumen von Fahrzeugen. Bei der Herstellung wird das Naturmaterial dabei häufig als eine Deckschicht auf die, dem Betrachter zugewandten, Sichtseite eines Basisteiles aufgebracht.

Nachteilig beim Einsatz dieser Materialien ist die eingeschränkte gestalterische Freiheit, da nur begrenzte Muster und Farbvariationen zur Verfügung stehen. Dies gilt speziell für Materialien, die allgemein mit den Begriffen Exklusivität und Luxus in Verbindung gebracht werden wie z.B. Wurzelholz.

Aus der japanischen Patentschrift JP 63-42857 bzw. Ihrem redaktionell überarbeiteten Abstract aus der "DATABASE WPI; Section Ch, Week 9613, Derwent Publication Ltd., London, GB; Class A93, AN 96-126876" ist ein gattungsgemäße Verkleidungsteil bekannt, welches eine Deckschicht aus dünnem Naturstein aufweist. Der Naturstein ist dabei auf dem ebenen Paneel aus einer wabenartigen Struktur über einen thermisch wirksamen transparenten Kleber verklebt.

Des weiteren ist ein mit einer Glasplatte laminierter und auf eine dünnere Schichtstärke abgearbeiteter Natursteinblock aus der US 5,078,815 bekannt.

Beide Aufbauten weisen dabei jedoch den gravierenden Nachteil auf, daß sie an die Formgebung des flachen Paneels oder der Scheibe gebunden sind und damit nur flache zweidimensionale Oberflächenformen erlauben. Außerdem sind die verbleibenden Schichten aus Stein noch vergleichsweise dick und können bei Schockbelastung oder dergleichen oder gegebenenfalls auch mit ihrem Trägermaterial aus Glas gemeinsam splittern, die Splitter können dabei als umherfliegende Teile in der Nähe befindliche Personen verletzen.

Aufgrund dieser Nachteile ist eine derartige Struktur zur Verwendung beispielsweise in Fahrzeugen, wo aufgrund von der Möglichkeit auftretender Unfälle durchaus mit einer derartigen schockhaften Belastung zu rechnen ist, nicht einsetzbar.

Zum weiteren allgemeinen Stand der Technik soll auf die EP 0122 357 A1 verwiesen werden, welche gegebenenfalls eine ebene Platte aus einem Kompositmaterial zeigt, welches unter anderem Naturstein und ein Trägermaterial aus transparentem Glas aufweist.

Zum weiteren allgemeinen Stand der Technik soll außerdem auf die beiden Schriften FR 2 643 023 und die DE 41 34 373 A1 verwiesen werden. Beide Schriften zeigen laminierte Materialien bei welchen vorgefertigte Elemente aus Naturstein auf Trägerelemente aufgebracht bzw. aufgeklebt werden.

Der Erfindung liegt die Aufgabe zugrunde, ein Verkleidungsteil mit einer dekorativen Deckschicht zu schaffen, bei welchem es vielfältige Gestaltungsmöglichkeiten gibt und das darüber hinaus dem Fahrzeuginneren einen exklusiven Charakter verleiht. Dabei sollte gegenüber den bisher üblichen Möglichkeiten kein erhöhter Aufwand an Kosten und Fertigungstechnik verursacht werden.

Erfindungsgemäß wird diese Aufgabe gemäß dem kennzeichnenden Teil von Anspruch 1 gelöst. In Anspruch 8 ist ein Verfahren zur Herstellung des Verkleidungsteiles näher definiert.

Durch die Verwendung einer Deckschicht aus Naturstein wird eine vorteilhafte, neuartige Dekorationswirkung erzielt. Aufgrund des Artenreichtums der Gesteinsarten, von denen etwa 6000 Arten grundsätzlich geeignet wären, stehen viele Muster- und Farbvarianten, bei einigen Gesteinsarten auch Lumineszenzeffekte, zur Verfügung, was eine große gestalterische Freiheit erlaubt.

Ein weiterer Vorteil ist, daß je nach Wahl der Gesteinsart nur geringe Rohstoffkosten verursacht werden, da auch Abraumgestein aus Bautätigkeiten Verwendung finden kann.

Vorteilhaft ist auch die Verrottungs- und Korrosionsfreiheit der Deckschicht aus Naturstein, so daß ein Einsatz nicht nur im Innen-, sondern auch im Außenbereich möglich ist.

Durch die Versiegelung der sichtseitigen Oberfläche des Natursteins mit der Klarlackschicht wird erreicht, daß diese Klarlackschicht alle Bearbeitungsrauheiten aufnimmt. Die freiliegende Sichtseite ist damit strukturfrei glatt und läßt sich sehr leicht polieren, so daß sie bezüglich ihrer Oberflächenrauheit glänzend ist. Im Vergleich zum Polieren und anschließenden Versiegeln einer Natursteinoberfläche mit Wachs, wie dies allgemein gemäß dem Stand der Technik üblich ist, verursacht das Lackieren und Polieren der Oberfläche deutlich weniger Fertigungsaufwand und erheblich weniger Kosten.

Außerdem ergibt sich der weitere Vorteil, daß im Falle eines unfallbedingten Aufpralls bzw. einer Zerstörung des Verkleidungsteils die Klarlackschicht die Splitter zusammenhält oder diese zumindest im Bereich des Basisteils festhält. Durch das Ausbleiben von herumfliegenden Splittern kann damit die Gefahr der Verletzung von Fahrzeuginsassen im Falle eines Unfall vermindert oder zumindest verringert werden.

Der Naturstein an sich bietet dem Gestalter dabei einige sehr attraktive Eigenschaften. Durch Materialeinschlüße, wie z.B. Feldspate, Edelmetalle oder organischer Materie, wird eine einzigartige Tiefenwirkung erzielt, die auf synthetischem Wege nicht erreicht werden kann.

Darüber hinaus besitzt Stein, speziell die kalkhaltigen Sorten, sehr beeindruckende optische Eigenschaften. So wird z.B. von einigen Marmorarten mit organischen Einschlüssen das Licht zeitversetzt in einer anderen Wellenlänge wieder abgegeben. Der eigentlich weiße Stein leuchtet nach Ausschalten des Lichts in grünen Adern nach.

Ein anderes Beispiel ist ein feinkörniger, grauer als Blue Eyes bezeichneter Granit, der je nach Lichteinfall intensiv blau leuchtet. Um die Tiefenwirkung und die optischen Effekte des Natursteins optimal zu nutzen, bietet sich die Verwendung von monolithischen Natursteinblöcken zur Herstellung von Verkleidungsteilen und Zierleisten nach dem erfindungsgemäßen Verfahren besonders an.

Das in Anspruch 8 näher definierte Herstellungsverfahren verursacht durch die rationelle Bearbeitbarkeit des Natursteins keinen fertigungsbedingten Preisnachteil gegenüber Holz, sondern kann sogar durch den im Mittel günstigeren Preis des Ausgangsmaterials insgesamt die entstehenden Kosten reduzieren.
Das Verbinden des Natursteins mit dem Basisteil vor dessen Endbearbeitung hat den Vorteil, daß durch Stöße oder Biegemomente bei der Handhabung, bei einer Bearbeitung der sichtseitigen Deckschicht oder bei einer Montage des Natursteines, dieser nicht in dem Maße zerstörungsanfällig ist, wie es eine dünne Natursteinschicht alleine wäre. Das Basisteil wirkt quasi als Schutz bzw. zur Versteifung des Natursteines.

Weitere vorteilhafte Ausgestaltungen der Erfindung ergeben sich aus den Unteransprüchen und aus dem nachfolgend anhand der Zeichnung prinzipmäßig beschriebenen Ausführungsbeispiel und Herstellungsverfahren.

Es zeigt:
- Fig. 1: einen schematischen Aufbau eines erfindungsgemäßen Verkleidungsteiles,
- Fig. 2: ein Herausarbeiten der Basisteilform aus der Rückseite eines Natursteinblocks,
- Fig. 3: einen Verbund aus Basisteil und teilbearbeitetem Natursteinblock, und
- Fig. 4: ein Herausarbeiten der sichtseitigen Oberflächenform des Natursteins.

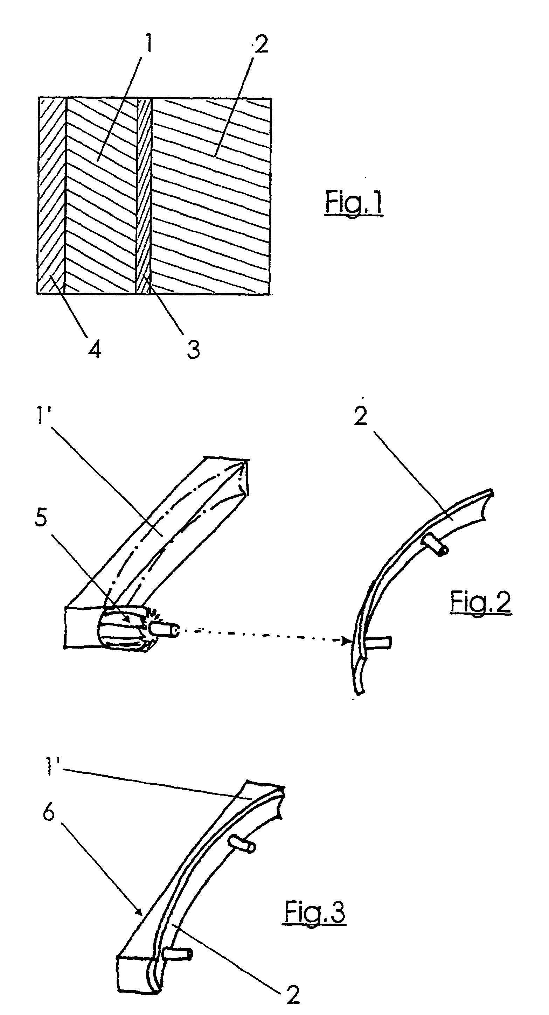

Die Figuren 1 bis 4 zeigen Darstellungen des Verkleidungsteiles und des Herstellungsverfahrens in stark schematisierter Form.

Gemäß der vergrößerten Darstellung in Fig. 1 ist eine dünne Schicht Naturstein 1 mit einem Basisteil 2 durch eine Klebeschicht 3 verbunden. Als sichtseitiger Abschluß ist eine Klarlackschicht 4 aufgetragen.

Eine weitere Ausgestaltung kann z.B. aus einem Basisteil 2 aus Aluminiumguß bestehen, das über eine Klebeschicht 3, aus einem thermisch belastbaren Schaumkleber oder einem 2-Komponentenkleber, mit der Natursteinschicht 1 verbunden ist.

Aufgrund der dünnen Schichtstärke des Natursteins 1, in der minimal möglichen Größenordnung von etwa 1 mm, ist eine Gewichtszunahme der dekorativen Verkleidungsteile gegenüber der Verwendung von Holz-, Kunststoff-, Metall- oder Metalloxiddeckschichten zu vernachlässigen.

Die dünne Schichtstärke des Natursteins ermöglicht, diese mit Hilfe eines lichtleitfähigen Basisteils, z.B. aus Polymethylmethacrylat, von hinten zu beleuchten. Dadurch können weitere sehr reizvolle Gestaltungsmöglichkeiten verwirklicht werden.

Das Aufbringen von Klarlack 4 erfolgt am günstigsten durch Aufspritzen einer Schicht Isolationslack und einem abschließenden Dickschicht-Polyesterlack. Die Aufgabe des Isolationslackes ist zu verhindern, daß der abschließende Dickschicht-Polyesterlack in offene Gesteinsporen eindringt, dort nicht aushärtet und durch Diffusionseffekte zur gegenüberliegenden Seite der dünnen Natursteinschicht 1 gelangt. In diesem Fall wäre zu befürchten, daß die Klebeschicht 3 vom lösungsmittelhaltigen Polyesterlack angegriffen und eventuell zerstört wird.

Der Dickschicht-Polyesterlack als Abschluß der sichtseitigen Oberfläche der dekorativen Deckschicht aus Naturstein 1 nimmt alle Bearbeitungsrauhigkeiten auf. Die freiliegende Sichtseite ist damit strukturfrei glatt und läßt sich leicht polieren, so daß sie bezüglich ihrer Oberflächenrauheit glänzend ist. Im Vergleich zum Polieren und anschließenden Versiegeln einer Natursteinoberfläche mit Wachs, wie dies allgemein üblich ist, verursacht das Lackieren und Polieren der Oberfläche erheblich weniger Fertigungsaufwand und Kosten.

Im Falle eines unfallbedingten Aufpralls bzw. einer Zerstörung des Verkleidungsteiles, hält ein zähelastischer Klarlack 4 die Splitter zusammen oder zumindest am Basisteil fest.

Aus Fig. 2 ist ersichtlich, wie aus einem Natursteinblock 1' die Oberflächenform des Basisteiles 2 mittels eines Fräsers 5 durch negatives Kopierfräsen herausgearbeitet wird. Durch Fräsen des Natursteinblocks 1' nutzt man ein Fertigungsverfahren, das den Fertigungsund Kostenaufwand von Holz- oder Metallbearbeitung nicht überschreitet.

Fig. 3 zeigt den aus teilbearbeitetem Natursteinblock 1' und Basisteil 2 durch Verkleben dauerhaft gebildeten Verbund 6. Die nachfolgend noch herauszuarbeitende dünne Natursteinschicht 1 ist schon vor ihrer weiteren Bearbeitung mit dem Basisteil 2 verbunden.

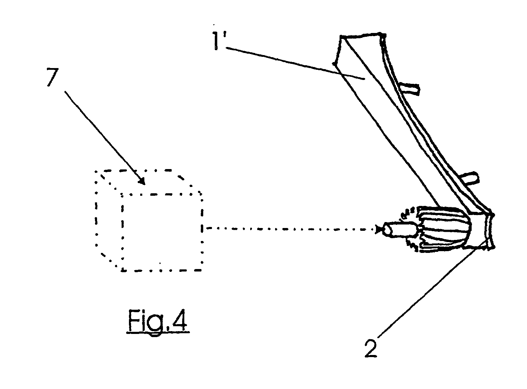

Fig. 4 zeigt die sichtseitige Bearbeitung der Oberflächenform des Verbundes 6, hier insbesondere durch eine numerisch gesteuerte Freiformfräseinrichtung 7. Der Verbund 6 wird bei diesem Schritt der Herstellung über das Basisteil 2 durch die Spanneinrichtung der Freiformfräseinrichtung 7 gehaltert.

## Patentansprüche

1. Verkleidungsteil für Dekorationszwecke für die Innenverkleidung von Fahrgasträumen von Fahrzeugen, bei dem auf der Sichtseite eines Basisteiles (2) eine dekorative Deckschicht aus Naturstein (1) aufgebracht ist, **dadurch gekennzeichnet** die Sichtseite der dekorativen Deckschicht aus Naturstein (1) mit mindestens einer Klarlackschicht (4) versehen ist.

2. Verkleidungsteil nach Anspruch 1,
**dadurch gekennzeichnet, daß** die Klarlackschicht (4) zäh-elastisch ist.

3. Verkleidungsteil nach Anspruch 1 oder 2,
**dadurch gekennzeichnet, daß** die dekorative Deckschicht aus Naturstein (1) für eine Zierleiste vorgesehen ist.

4. Verkleidungsteil nach Anspruch 1, 2 oder 3,
**dadurch gekennzeichnet, daß** die dekorative Deckschicht aus Naturstein (1) mit dem Basisteil (2) durch eine Klebeschicht (3) verbunden ist.

5. Verkleidungsteil nach einem der Ansprüche 1 bis 4,
**dadurch gekennzeichnet, daß** die dekorative Deckschicht aus Naturstein (1) in dünner, lichtdurchlässiger Schichtstärke ausgeführt ist.

6. Verkleidungsteil nach Anspruch 5,
**dadurch gekennzeichnet, daß** zur Beleuchtung der dekorativen Deckschicht von der Rückseite her das Basisteil (2) und gegebenenfalls die Klebeschicht (3) zwischen der dekorativen Deckschicht aus Naturstein (1) und dem Basisteil (2) ganz oder teilweise durchsichtiges oder transparentes Material aufweist.

7. Verfahren zur Herstellung eines Verkleidungsteiles nach einem der Ansprüche 1 bis 6, wobei aus einem der Größe des Verkleidungsteiles entsprechendem Natursteinblock (1') die Negativform des Basisteiles (2), wenigstens in dem Umfang in dem dieses mit der dekorativen Deckschicht aus Naturstein (1) verbunden werden soll, aus dem Vollen herausgearbeitet wird, wonach der so teilbearbeitete Natursteinblock (1') mit der bearbeiteten Seite mit dem Basisteil (2), auf dessen dem Betrachter zugewandten Seite, dauerhaft verbunden wird und anschließend aus dem aus Basisteil (2) und teilbearbeitetem Natursteinblock (1') bestehenden Verbund (6) die sichtseitige Oberflächenform der dekorativen Deckschicht aus Naturstein (1) aus dem Vollen herausgearbeitet wird, wonach auf der Sichtseite der dekorativen Deckschicht aus Naturstein (1) mindestens eine Klarlackschicht (4) aufgebracht wird.

8. Verfahren zur Herstellung eines Verkleidungsteiles nach Anspruch 7,
**dadurch gekennzeichnet, daß** der Verbund (6) aus Basisteil (2) und teilbearbeitetem Natursteinblock (1') bei der Herausarbeitung der sichtseitigen Oberflächenform, über das Basisteil (2) gehaltert wird.

9. Verfahren zur Herstellung eines Verkleidungsteiles nach Anspruch 7,
**dadurch gekennzeichnet, daß** die Formen aus dem Natursteinblock (1') mittels Fräsen herausgearbeitet werden.

10. Verfahren zur Herstellung eines Verkleidungsteiles nach einem der Ansprüche 7 bis 9,
**dadurch gekennzeichnet, daß** die dauerhafte Verbindung von Basisteil (2) und Naturstein (1) durch Verkleben erfolgt.

## Claims

1. Cladding element for decorative purposes, for the interior cladding of passenger compartments of vehicles, in which a decorative covering layer of natural stone (1) is applied on the visible side of a basic component (2),
**characterised in that**
the visible side of the decorative covering layer of natural stone (1) is provided with at least one layer of clear varnish (4).

2. Cladding element according to Claim 1,
**characterised in that**
the layer of clear varnish (4) is elastically tenacious.

3. Cladding element according to Claims 1 or 2,
**characterised in that**
the decorative covering layer of natural stone (1) is provided for a moulding.

4. Cladding element according to Claims 1, 2 or 3,
**characterised in that**
the decorative covering layer of natural stone (1) is bonded to the basis component (2) by a layer of adhesive (3).

5. Cladding element according to any of Claims 1 to 4,
**characterised in that**
the decorative layer of natural stone (1) is sufficiently thin to allow the passage of light.

6. Cladding element according to Claim 5, **characterised in that**
to illuminate the decorative covering layer from the back, the basis component (2) and if necessary the adhesive layer (3) between the decorative covering layer of natural stone (1) and the basis component (2) are made from wholly or partially translucent or transparent materials.

7. Method for the production of a cladding element according to any of Claims 1 to 6, in which the negative shape of the basis component (2) is machines out of the solid surface of a block (1') of natural stone commensurate with the size of the cladding element, at least over the area in which the basis component is to be bonded to the decorative covering layer of natural stone (1), and after this the machined side of the partially machined natural stone block (1') is permanently bonded to the basis component (2) on the side of the latter facing the observer, and then, from the composite (6) consisting of the basis component (2) and the partially machined natural stone block (1'), the surface shape of the decorative covering layer of natural stone (1) on the visible side is machined out of the solid, and thereafter at least one layer of clear varnish (4) is applied on the visible side of the decorative covering layer of natural stone (1).

8. Method for the production of a cladding element according to Claim 7,
**characterised in that**
the composite (6) consisting of the basis component (2) and the partially machined block of natural stone (1') is held by means of the basis component (2) during the machining out of the surface shape on the visible side.

9. Method for the production of a cladding element according to Claim 7,
**characterised in that**
the shapes are machined out of the block of natural stone (1') by milling.

10. Method for the production of a cladding element according to any of Claims 7 to 9,
**characterised in that**
the permanent connection of the basis component (2) to the natural stone (1) is effected by adhesive bonding.

## Revendications

1. Elément d'habillage à effet décoratif pour l'habillage intérieur d'habitacles de véhicules automobiles, dans lequel une couche de revêtement décorative en pierre naturelle (1) est appliquée sur le côté visible d'une partie de base (2), **caractérisé en ce que** le côté visible de la couche de revêtement décorative en pierre naturelle (1) est pourvu d'au moins une couche de vernis transparent (4).

2. Elément d'habillage selon la revendication 1, **caractérisé en ce que** la couche de vernis transparent (4) est viscoélastique.

3. Elément d'habillage selon la revendication 2, **caractérisé en ce que** la couche de revêtement décorative en pierre naturelle (1) est prévue pour un ornement collé.

4. Elément d'habillage selon la revendication 1, 2 ou 3, **caractérisé en ce que** la couche de revêtement décorative en pierre naturelle (1) est reliée à la partie de base (2) par une couche de colle (3).

5. Elément d'habillage selon les revendications 1 à 4, **caractérisé en ce que** la couche de revêtement décorative en pierre naturelle (1) est agencée avec la forme d'une épaisseur de couche mince et est transparente.

6. Elément d'habillage selon la revendication 5, **caractérisé en ce que** pour l'éclairement de la couche de revêtement décorative, la partie de base (2) et éventuellement la couche de colle (3) possèdent, à partir de la face arrière, entre la couche de revêtement décorative en pierre naturelle (1) et la partie de base (2), un matériau en totalité ou en partie translucide ou transparent.

7. Procédé pour fabriquer un élément d'habillage selon l'une des revendications 1 à 6, selon lequel à partir d'un bloc de pierre naturelle (1') qui correspond à la taille de l'élément d'habillage, on tire de la masse la forme en creux de la partie de base (2), au moins sur l'étendue, sur laquelle cette partie doit être reliée à la couche de revêtement décorative en pierre naturelle (1), à la suite de quoi on relie de façon permanente le bloc de pierre naturelle (1') ainsi travaillé partiellement, par son côté travaillé à la partie de base (2), sur son côté tourné vers l'observateur, et ensuite on dégage de la masse la forme de surface visible de la couche de revêtement décorative en pierre naturelle (1) à partir de l'ensemble composite (6) formé par la partie de base (2) et le bloc de pierre naturelle (1') partiellement travaillé, à la suite de quoi on applique au moins une couche de vernis transparent (4) sur la face visible de la couche de revêtement décorative en pierre naturelle (1).

8. Procédé pour fabriquer un élément d'habillage selon la revendication 7, **caractérisé en ce qu'**on retient l'ensemble composite formé par la partie de base et le bloc de pierre naturelle (1') partiellement travaillé lors du dégagement de la forme de surface visible, au-dessus de la partie de base (2).

9. Procédé pour fabriquer un élément d'habillage selon la revendication 7, **caractérisé en ce que** les formes sont dégagées du bloc de pierre naturelle (1') par fraisage.

10. Procédé pour fabriquer un élément d'habillage selon les revendications 7 à 9, **caractérisé en ce que** la liaison durable entre la partie de base (2) et la pierre naturelle (1) est réalisée par collage.
